# EUROPÄISCHE PATENTANMELDUNG

(11) **EP 3 995 244 A1**
(43) Veröffentlichungstag der Anmeldung: **11.05.2022**
(21) Anmeldenummer: 20206701.3
(22) Anmeldetag: 10.11.2020
(51) Int. Cl.: B23K 9/095, B23K 9/32, B23K 37/00, B23K 9/16, B23K 9/28

(54) **VERFAHREN UND VORRICHTUNG ZUR KÜHLUNG VON KOMPONENTEN EINER SCHWEISSVORRICHTUNG**

(71) Anmelder: FRONIUS INTERNATIONAL GmbH, 4643 Pettenbach (AT)
(72) Erfinder: LEONHARTSBERGER, Andreas, 4643 Pettenbach (AT); GROßAUER, Wolfgang, 4643 Pettenbach (AT); BAUMGARTNER, Florian, 4643 Pettenbach (AT)
(74) Vertreter: SONN Patentanwälte OG

(57) **Zusammenfassung**

Die Erfindung betrifft ein Verfahren sowie eine Vorrichtung zur Kühlung von Komponenten einer aus einer Schweißstromquelle (2) und einem über ein Schlauchpaket (3) mit der Schweißstromquelle (2) verbundenen Schweißbrenner (4) bestehenden Schweißvorrichtung (1) mit einer Vorrichtung (5) zur Bereitstellung eines Schutzgases (S), wobei Druckluft (D) zu den zu kühlenden Komponenten der Schweißvorrichtung (1) geführt wird. Zur Erzielung einer optimalen Kühlung mittels Druckluft (D) wird die Durchflussmenge (V_{D}) der Druckluft (D) zur Kühlung der Komponenten der Schweißvorrichtung (1) in einer entsprechenden Vorrichtung (9) in Abhängigkeit von Schweißparametern (Pᵢ) gesteuert oder geregelt.

## Beschreibung

Die Erfindung betrifft ein Verfahren zur Kühlung von Komponenten einer aus einer Schweißstromquelle und einem über ein Schlauchpaket mit der Schweißstromquelle verbundenen Schweißbrenner bestehenden Schweißvorrichtung mit einer Vorrichtung zur Bereitstellung eines Schutzgases, wobei Druckluft zu den zu kühlenden Komponenten der Schweißvorrichtung geführt wird.

Weiters betrifft die Erfindung eine Vorrichtung zur Kühlung von Komponenten einer aus einer Schweißstromquelle und einem über ein Schlauchpaket mit der Schweißstromquelle verbundenen Schweißbrenner bestehenden Schweißvorrichtung mit einer Vorrichtung zur Bereitstellung eines Schutzgases, mit einer Druckluftquelle zur Bereitstellung von Druckluft zur Kühlung der zu kühlenden Komponenten der Schweißvorrichtung.

Die vorliegende Erfindung bezieht sich auf verschiedene Schweißverfahren, unabhängig davon, ob die Schweißbrenner manuell oder mit einem Roboter oder einem anderen Handling-System geführt werden. Zu den Schweißverfahren zählen beispielsweise Lichtbogenschweißverfahren mit abschmelzendem Schweißdraht (MIG Metall-Inertgas-Schweißverfahren, MAG Metall-Aktivgas-Schweißverfahren) sowie mit nichtabschmelzender Schweißelektrode (WIG Wolfram-Inertgas-Schweißverfahren), Plasma-Schweißverfahren sowie Laser unterstützte bzw. kombinierte Schweißverfahren, wie beispielsweise Laser-Hybrid-Schweißverfahren. Des Weiteren kann diese Erfindung auch auf selbstschützende und/oder nicht selbstschützende Fülldraht-Schweißverfahren angewendet werden. Aufgrund der hohen Schweißströme und dem zwischen dem Ende des Schweißdrahts oder der Schweißelektrode und dem Werkstück brennenden Lichtbogen während des Schweißverfahrens treten bei Schweißverfahren üblicherweise relativ hohe Temperaturen auf, welche für eine höhere Lebensdauer der Komponenten des Schweißbrenners mit entsprechenden Kühlverfahren reduziert werden müssen. Den hohen Temperaturen sind hauptsächlich Komponenten des Schweißbrenners, wie das Kontaktrohr, die Gasdüse, etc. aber auch elektrische Leitungen im Schlauchpaket ausgesetzt.

Derzeit unterscheidet man grundsätzlich zwischen flüssigkeitsgekühlten und gasgekühlten Schweißvorrichtungen oder Schweißverfahren. Bei der Gaskühlung wirken zum einen das Prozessgas (Schutzgas) und zum anderen die Umgebung (Konvektion, Strahlung) kühlend. Diese Kühlmechanismen wirken auch bei flüssigkeitsgekühlten Schweißbrennern, spielen dort aber nur eine untergeordnete Rolle. Flüssigkeitskühlungen weisen aufgrund der höheren Komplexität höhere Kosten bei Anschaffung und Wartung auf und können aufgrund möglicher Leckagen zu Schweißfehlern führen. Solche Flüssigkeitsleckagen sind in Kombination mit den beim Schweißen auftretenden hohen Stromstärken und den zumindest teilweise auftretenden hohen Spannungen beim Zünden bzw. Wiederzünden eines Lichtbogens besonders nachteilig. Dies ist ein Grund dafür, dass in manchen Bereichen, beispielsweise in der Autozulieferindustrie, flüssigkeitsgekühlte Schweißsysteme nicht eingesetzt oder zumindest vermieden werden. Bei gasgekühlten Systemen vor allem in höheren Leistungsbereichen resultieren zu hohe Temperaturen der Lichtbogengruppe (Kontaktrohrstrang, Gasdüsenstrang, Gasverteiler, etc.), was zu geringeren Standzeiten der Verschleißteile und zu einer Zunahme von Schweißfehlern führt. Zur Verbesserung der Kühlwirkung kommt bei gasgekühlten Systemen teilweise Druckluft zur Anwendung. Da Druckluft in vielen Bereichen der Technik zur Verfügung steht, kann sie ohne großen Aufwand auch zur Kühlung von Schweißsystemen eingesetzt werden.

Beispielsweise beschreibt die DE 20 2005 003 846 U1 einen Schweißbrenner, bei dem anstatt des Schutzgases Druckluft zur Kühlung verwendet wird, indem die Druckluft über einen Schlauch zur Gasdüse des Schweißbrenners geleitet wird. Diese Methode ist aber nur bei einem Fülldrahtschweißverfahren möglich, da die Schutzgasatmosphäre durch die Füllung des Schweißdrahts bereitgestellt wird.

Die US 5,248,868 A beschreibt eine Schweißvorrichtung, bei der sowohl das Kabel zur Führung des Schweißstroms als auch der Schweißbrenner mittels Druckluft gekühlt wird. Der Druckluftstrom wird über das Schlauchpaket zum Schweißbrenner geführt, in der Gasdüse umgekehrt und danach in die Atmosphäre entlassen.

Aufgrund der zur Kühlung verwendeten Druckluft ergeben sich negative Auswirkungen auf den Gasschutz des Schweißverfahrens, was zu Schweißnahtfehlern führen kann.

Die US 6,005,221 A beschreibt eine Schweißvorrichtung, bei der Druckluft zum Abführen der Verlustwärme aus dem Bereich des Schweißkopfes verwendet wird. Eine Regelung der Durchflussmenge der Druckluft wird erwähnt, ohne dass jedoch Details über die Regelung bekanntgegeben werden.

Die WO 2012/031974 A1 beschreibt einen Schweißbrenner mit Zwangsluftkühlung, wobei Umgebungsluft zur Kühlung angesaugt und in Richtung Schweißbrenner gefördert und am Ende des Schweißbrenners nach außen abgeleitet wird. Zur Vermeidung von Störungen im Bereich der Schutzgasatmosphäre wird die Kühlluft nicht direkt in den Bereich des Schweißprozesses geblasen.

Die Aufgabe der vorliegenden Erfindung besteht in der Schaffung eines oben genannten Verfahrens und einer oben genannten Vorrichtung zur Kühlung von Komponenten einer Schweißvorrichtung mittels Druckluft, wodurch eine optimale Kühlung bei höchstmöglicher Vermeidung einer Störung des Schutzgases erzielt werden kann. Das Kühlsystem soll kostengünstiger als flüssigkeitsgekühlte Systeme sein, keine Probleme mit Leckagen (Schweißfehlern) verursachen und möglichst einfach in der Handhabung sein. Nachteile bekannter Verfahren oder Vorrichtungen sollen vermieden oder zumindest reduziert werden.

Gelöst wird die erfindungsgemäße Aufgabe in verfahrensmäßiger Hinsicht dadurch, dass die Durchflussmenge der Druckluft zur Kühlung der Komponenten der Schweißvorrichtung in Abhängigkeit von Schweißparametern gesteuert oder geregelt wird. Durch die Verwendung von Druckluft kann das Verfahren kostengünstiger und in Bezug auf Schweißfehler sicherer durchgeführt werden. Aufgrund der Steuerung oder Regelung der Durchflussmenge der Druckluft in Abhängigkeit von Schweißparametern kann der allenfalls negative Einfluss auf das Schutzgas und somit auf die Schweißqualität minimiert oder ausgeschaltet werden. Die Druckluft wird in geeigneter Weise zu den zu kühlenden Komponenten, insbesondere die Lichtbogengruppe bestehend aus einem Gasdüsenstrang und bzw. oder einem Kontaktrohrstrang im Schweißbrenner und allenfalls auch in Bereiche des Schlauchpakets geleitet und die Wärme abgeführt. Typischerweise erhitzen sich Druckluftmengen von beispielsweise 100 Nl/min um bis zu 250°C und können damit rund 500 W Wärmeleistung abführen. Dies kann zu Temperaturen der Verschleißteile, welche unter den Temperaturen bei flüssigkeitsgekühlten Schweißvorrichtungen liegen und somit zu einer enormen Verlängerung der Standzeiten und einer deutlichen Reduktion der Betriebskosten führen. Im Gegensatz zu flüssigkeitsgekühlten Schweißvorrichtungen ist der Wartungsaufwand bei Verwendung von Druckluft zur Kühlung wesentlich geringer, da es bei Druckluft-gekühlten Systemen zu keinen Flüssigkeitsleckagen kommen kann. Eine Anwendung des erfindungsgemäßen Verfahrens ist insbesondere bei aufeinanderfolgenden kurzen Schweißzyklen von einigen Sekunden, wie sie beispielsweise in der Autoindustrie vorkommen, vorteilhaft.

Beispielsweise wird die Durchflussmenge der Druckluft in Abhängigkeit der durchschnittlichen Schweißleistung gesteuert oder geregelt. Dies stellt eine einfache und wirkungsvolle Maßnahme dar. Die durchschnittliche Schweißleistung berechnet sich aus dem Produkt der jeweiligen Schweißleistung und der jeweiligen Schweißdauer dividiert durch die gesamte Schweißzeit. Je höher die Schweißleistung, desto höher ist die Durchflussmenge der Druckluft bzw. der Druckluftstrom.

Weiters kann die Durchflussmenge der Druckluft in zeitlicher Abhängigkeit zum Schweißprozess geregelt werden, insbesondere mit einer vorgegebenen Zeitverzögerung zeitverzögert nach Beginn des Schweißprozesses zugeschaltet und mit einer vorgegebenen Zeitverzögerung zeitverzögert nach Ende des Schweißprozesses abgeschaltet werden. Durch diese Maßnahmen kann der negative Einfluss auf das Schutzgas durch den Druckluftstrom minimiert oder sogar verhindert werden.

Im Falle mehrerer durch Schweißpausen unterbrochener Schweißprozesse kann die Durchflussmenge der Druckluft derart geregelt wird, dass die Druckluft während der Schweißpausen, vorzugsweise ausschließlich während der Schweißpausen, zugeschaltet wird. Auch durch diese Maßnahme kann eine optimale Kühlung der Komponenten des Schweißbrenners bei minimaler Beeinflussung des Schutzgasstromes während des Schweißprozesses durch die für die Kühlung verwendete Druckluft erzielt werden. Aufgrund der relativ hohen thermischen Zeitkonstante des Schweißbrennersystems kann eine effiziente Kühlung auch während der Schweißpausen, also in den Zeiten, in denen kein Lichtbogen brennt, erzielt werden. Dies gilt besonders bei kurzen Schweißprozessphasen bzw. kurzen Schweißnähten.

Ebenso kann die Durchflussmenge der Druckluft in Abhängigkeit eines die Position und Geometrie eines zu schweißenden Werkstücks entlang einer Schweißbahn repräsentierenden Schweißparameters gesteuert oder geregelt werden. Auf diese Weise kann beispielsweise an Schweißstellen, an denen eine negative Beeinflussung des Schweißprozesses angenommen werden kann, der Druckluftstrom reduziert oder abgeschaltet werden.

Die Durchflussmenge der Druckluft kann über die Öffnungsdauer oder über den Öffnungsquerschnitt eines Druckluftventils gesteuert oder geregelt werden. Dementsprechend wird die Durchflussmenge der Druckluft entweder durch die Öffnungszeit und bzw. oder den Grad der Öffnung des Ventils eingestellt. Beispielsweise kann ein Magnetventil als Druckluftventil eingesetzt werden.

Wenn die Durchflussmenge der Druckluft in Abhängigkeit zumindest einer im Schweißbrenner gemessenen Temperatur gesteuert oder geregelt wird, kann eine gezielte Kühlung der entsprechenden Komponenten des Schweißbrenners in Abhängigkeit der tatsächlichen Temperatur an kritischen Stellen des Schweißbrenners stattfinden. Dadurch kann auch die Menge der für die Kühlung verwendeten Druckluft minimiert werden. Für die Steuerung oder Regelung der Durchflussmenge der Druckluft kann zumindest eine zweite Temperatur herangezogen werden, welche beispielsweise direkt am Werkstück gemessen wird.

Die Durchflussmenge an Schutzgas wird gemäß einem weiteren Merkmal der Erfindung in Abhängigkeit der Durchflussmenge der Druckluft gesteuert oder geregelt. Durch diese Maßnahme kann der allenfalls negative Einfluss der zur Kühlung verwendeten Druckluft auf den Schutzgasstrom noch weiter reduziert werden. Beispielsweise kann der Schutzgasstrom bei gleichzeitiger Verwendung von Druckluft zur Kühlung erhöht werden, um eine Beeinflussung durch die Druckluft zu reduzieren.

Zur Kühlung wird die Druckluft mit einer Durchflussmenge zwischen 10 und 250 Nl/min, bevorzugt zwischen 50 und 150 Nl/min, verwendet. Mit derartigen Druckluftmengen kann eine gute Kühlung erzielt werden, wohingegen die Kosten für den Einsatz der Druckluft sehr gering gehalten werden kann.

Gemäß einem weiteren Merkmal ist vorgesehen, dass die Druckluft zur Kühlung mit einem Druck zwischen 5 bis 10 bar, bevorzugt mit einem Druck zwischen 6 bar und 8 bar verwendet wird. Da in vielen Fertigungsbereichen Druckluft in einem solchen Druckbereich in Form einer zentralen Versorgung bzw. eines zentrales Netzes meist ohnedies zur Verfügung steht, können die Kosten für die Kühlung von Komponenten einer Schweißvorrichtung mit Hilfe von Druckluft sehr gering gehalten werden. Die Druckluft kann auch durch eine mobile Versorgung beispielsweise über Gasflaschen und/oder mobile Kompressoren und/oder Druckluftspeicher zur Verfügung gestellt werden. Die Druckluft kann Raumtemperatur haben, eventuell erwärmt oder aber auch gekühlt sein. Vorzugsweise ist die verwendete Druckluft vorbehandelt. Unter einer Vorbehandlung versteht man eine zumindest teilweise Entfernung von Ölen, einer zumindest teilweisen Entfernung von Feuchtigkeit mit einer zumindest teilweisen Abscheidung von Wasser und zumindest eine Vorfilterung von in der Luft enthaltenen Partikeln. Vorzugsweise ist weitgehend saubere Luft mit einer geringen Anzahl an Restpartikel, einer geringen Feuchtigkeit und einer geringen Ölverunreinigung zur Verwendung anzustreben. Unter Druckluft versteht man in der Regel Umgebungsluft, welche in komprimierter Form vorliegt. Neben reiner Luft ist es auch möglich unterschiedlichste Gase und Gasgemische, welche einen Druck aufweisen, weleher höher als der Umgebungsdruck ist, für die Kühlung zu verwenden.

Gemäß einem weiteren Merkmal der Erfindung kann der Druckluft gezielt eine Flüssigkeit in begrenzten Mengen beigemengt werden, um die Kühlwirkung des Mediums weiter zu erhöhen. Dabei wird die Flüssigkeit vorzugsweise in Form von Nassdampf beigemengt. Ferner wäre es natürlich auch möglich, in Spezialfällen Heißdampf oder Sattdampf zu verwenden. Eine derartige Beimengung einer Flüssigkeit kann beispielsweise über einen Zerstäuber, eine Venturi-Düse oder eine Dosiereinheit im Allgemeinen erfolgen. Die erhöhte Kühlwirkung begründet sich dadurch, dass die Flüssigkeit bei Kontakt mit heißen Oberflächen verdampft. Dabei wird den zu kühlenden Komponenten Energie in Form von Verdampfungsenthalpie entzogen. Hierbei haben unterschiedliche Flüssigkeiten eine unterschiedliche Verdampfungsenthalpie, wobei meist Wasser eingesetzt wird. Bei der Beimengung der Flüssigkeit muss darauf geachtet werden, dass die Verdampfung rückstandslos erfolgt. Ferner sollte darauf geachtet werden, dass möglichst Flüssigkeiten verwendet werden, welche weder einen negativen Einfluss auf den Schweißprozess, noch auf die Umwelt und Gesundheit des Schweißers haben. Ferner sollten die Flüssigkeiten so gewählt werden, dass diese die beim Schweißen entstehenden Schadstoffe zumindest teilweise binden können und sich dadurch positiv auf die Umwelt und Gesundheit auswirken können. Ferner wäre es denkbar, unterschiedliche Flüssigkeiten an unterschiedlichen Positionen des Druckluftpfads der Druckluft beizumengen. Die Menge der beigemischten Flüssigkeit ist in der Regel um mindestens eine, bis hin zu mehreren Zehnerpotenzen geringer, als die Flüssigkeitsmenge, welche bei wassergekühlten Schweißbrennern zum Einsatz kommen würde. Vorteilhaft kann auch sein, der Flüssigkeit beispielsweise Tenside zur Verringerung der Oberflächenspannung beizugeben und folglich eine in der Regel bessere bzw. vollständigere bzw. schnellere Benetzbarkeit von Oberflächen und dadurch eine nochmals verbesserte Kühlwirkung von Oberflächen zu erreichen.

Gelöst wird die erfindungsgemäße Aufgabe auch durch eine oben genannte Vorrichtung zur Kühlung von Komponenten einer Schweißvorrichtung, bei der eine Vorrichtung zur Steuerung oder Regelung der Durchflussmenge der Druckluft zur Kühlung der Komponenten der Schweißvorrichtung in Abhängigkeit von Schweißparametern vorgesehen ist. Eine derartige Vorrichtung kann relativ kostengünstig realisiert werden. Insbesondere existiert in vielen Fertigungsanlagen Druckluft ohnedies, sodass diese auch zur Kühlung von Komponenten der Schweißvorrichtung eingesetzt werden kann. Zu den weiteren erzielbaren Vorteilen wird auf die obige Beschreibung des Verfahrens zur Kühlung von Komponenten der Schweißvorrichtung verwiesen.

Die Vorrichtung zur Steuerung oder Regelung der Durchflussmenge der Druckluft kann mit einem Druckluftventil, insbesondere einem Magnetventil, verbunden sein. Durch Einstellung der Öffnungsdauer und bzw. oder des Öffnungsquerschnitts des Druckluftventils kann somit die Durchflussmenge der Druckluft entsprechend gesteuert oder geregelt werden. In Spezialfällen wäre auch eine Steuerung oder eine Regelung über eine Druckdifferenz möglich.

Wenn die Vorrichtung zur Steuerung oder Regelung der Durchflussmenge der Druckluft mit einer Steuervorrichtung der Schweißstromquelle verbunden ist, kann in Abhängigkeit verschiedenster Schweißparameter eine optimale Kühlung der Komponenten der Schweißvorrichtung erzielt werden. Beispielsweise kann die Druckluft in Abhängigkeit der Schweißleistung oder in Abhängigkeit der Schweißzeiten eingestellt werden, um einerseits eine optimale Kühlung und andererseits eine Minimierung des Einflusses auf den Schutzgasstrom während des Schweißprozesses erzielen zu können.

Ebenso kann die Vorrichtung zur Steuerung oder Regelung der Durchflussmenge der Druckluft mit der einer Steuervorrichtung eines Schweißroboters verbunden sein, um die Steuerung oder Regelung der Durchflussmenge der Druckluft in Abhängigkeit von Schweißparametern, welche durch den Schweißroboter beeinflusst werden, erzielen zu können. Die Verbindung der Vorrichtung zur Steuerung und Regelung der Durchflussmenge der Druckluft kann auch indirekt über die Steuervorrichtung der Schweißstromquelle erfolgen. Durch die direkte oder indirekte Verbindung mit der Steuervorrichtung des Schweißroboters kann eine Steuerung oder Regelung der Druckluft-Kühlung auch in Abhängigkeit der Position und Geometrie des zu schweißenden Werkstücks erfolgen.

Wenn die Vorrichtung zur Steuerung oder Regelung der Durchflussmenge der Druckluft mit zumindest einem Temperatursensor, vorzugsweise einem im Schweißbrenner angeordneten Temperatursensor, verbunden ist, kann die Kühlung optimal an die tatsächlichen Temperaturen angepasst werden. Der zumindest eine Temperatursensor ist an einer geeigneten Stelle oder an mehreren geeigneten Stellen des Schweißbrenners oder der Schweißvorrichtung platziert, um die tatsächliche Situation optimal beschreiben zu können. Die Erfassung der Temperatur kann beispielsweise über Thermoelemente (z.B. Typ-K), Halbleiter-Temperatursensoren, Widerstände (Heißleiter, Kaltleiter), sowohl in analoger oder auch in digitaler Form erfolgen. Ferner können optische Temperatursensoren bzw. Strahlungstemperatursensoren, wie einfache Pyrometer oder auch Quotienten-Pyrometer, zur Temperaturmessung eingesetzt werden.

Vorzugsweise ist stromabwärts des Druckluftventils eine Drossel angeordnet. Mit Hilfe der Drossel kann die Menge der Druckluft optimal eingestellt werden.

Gemäß einem weiteren Merkmal der Erfindung sind am Schweißbrenner zumindest ein Einlass für die Druckluft und zumindest ein Auslass, vorzugsweise mehrere radial nach außen und bzw. oder schräg nach hinten und bzw. oder axial nach hinten orientierte Auslässe, für die Druckluft angeordnet. Beispielsweise wird die zur Kühlung verwendete Druckluft über eine Öffnung am Anschluss des Schweißbrenners zugeführt. Die Ausströmung sollte so erfolgen, dass der Einfluss der ausgeströmten Druckluft auf den Schutzgasstrom möglichst gering ist. D.h. eine Beeinflussung der Strömung des Schutzgases und/oder eine Vermischung des Schutzgasstrom mit der Umgebungsluft sollte möglichst gering sein, da in der Regel eine negative Beeinflussung der Schutzgaswirkung ebenso einen negativen Einfluss auf die Schweißnahtqualität hat.

Ferner wird die Druckluft am Auslass entspannt, d.h. die Druckluft, mit einem gegenüber der Umgebung leichten Überdruck, fließt in die Umgebung ab. Man spricht bei dieser isenthalpen Druckminderung vom sogenannten Joule-Thomson-Effekt. Bei Luft unter Normalbedingungen kommt es bei einer derartigen Entspannung zu einem Absinken der Temperatur. Diese Temperaturreduktion am Auslass kann positiv zur Kühlung des Schweißbrenners beitragen.

Wenn zusätzlich oder alternativ zu dem zumindest einen Einlass am Schweißbrenner zumindest ein Einlass für die Druckluft am Schlauchpaket angeordnet ist, kann auch eine Kühlung des Schlauchpakets und beispielsweise der darin verlaufenden Kabel für die Leitung des Schweißstroms erfolgen.

Wenn eine Vorrichtung zur Beimengung von Flüssigkeit zur Druckluft vorgesehen ist, kann der Druckluft verbesserte Eigenschaften in Bezug auf die Kühlung verliehen werden.

Die vorliegende Erfindung wird anhand der beigefügten Zeichnungen näher erläutert. Darin zeigen:
- Fig. 1a: ein Blockschaltbild einer Schweißvorrichtung mit einer Vorrichtung zur Kühlung von Komponenten der Schweißvorrichtung mit Hilfe von Druckluft;
- Fig. 1b bis 1d: Blockschaltbilder verschiedener Varianten von Schweißvorrichtungen mit Vorrichtungen zur Kühlung von Komponenten der Schweißvorrichtung mit Hilfe von Druckluft gegenüber Figur 1a;
- Fig. 2: ein schematisches Schnittbild durch die Lichtbogengruppe eines Druckluft-gekühlten Schweißbrenners;
- Fig. 3: ein Ausführungsbeispiel der Regelung der Druckluft zur Kühlung von Komponenten einer Schweißvorrichtung in Abhängigkeit der Schweißleistung;
- Fig. 4: ein Ausführungsbeispiel der Regelung der Druckluft zur Kühlung von Komponenten einer Schweißvorrichtung in Abhängigkeit eines die Position und Geometrie eines zu schweißenden Werkstücks entlang einer Schweißbahn repräsentierenden Schweißparameters;
- Fig. 5: ein Ausführungsbeispiel der Regelung der Druckluft zur Kühlung von Komponenten einer Schweißvorrichtung in Abhängigkeit des Schweißprozesses;
- Fig. 6: ein Ausführungsbeispiel der Regelung der Druckluft zur Kühlung von Komponenten einer Schweißvorrichtung in Abhängigkeit der Schweißleistung;
- Fig. 7: ein Ausführungsbeispiel der Regelung der Druckluft zur Kühlung von Komponenten einer Schweißvorrichtung in Abhängigkeit kritischer Bereiche des Schweißprozesses unter gleichzeitiger Regelung der Schutzgasmenge;
- Fig. 8: ein weiteres Ausführungsbeispiel der Regelung der Druckluft zur Kühlung von Komponenten einer Schweißvorrichtung in Abhängigkeit der Brennertemperatur;
- Fig. 9: eine erste mögliche Ausführungsform einer Vorrichtung zur Beimengung einer Flüssigkeit zur Druckluft;
- Fig. 10: eine zweite mögliche Ausführungsform einer Vorrichtung zur Beimengung einer Flüssigkeit zur Druckluft;
- Fig. 11: eine dritte mögliche Ausführungsform einer Vorrichtung zur Beimengung einer Flüssigkeit zur Druckluft; und
- Fig. 12: eine vierte mögliche Ausführungsform einer Vorrichtung zur Beimengung einer Flüssigkeit zur Druckluft.

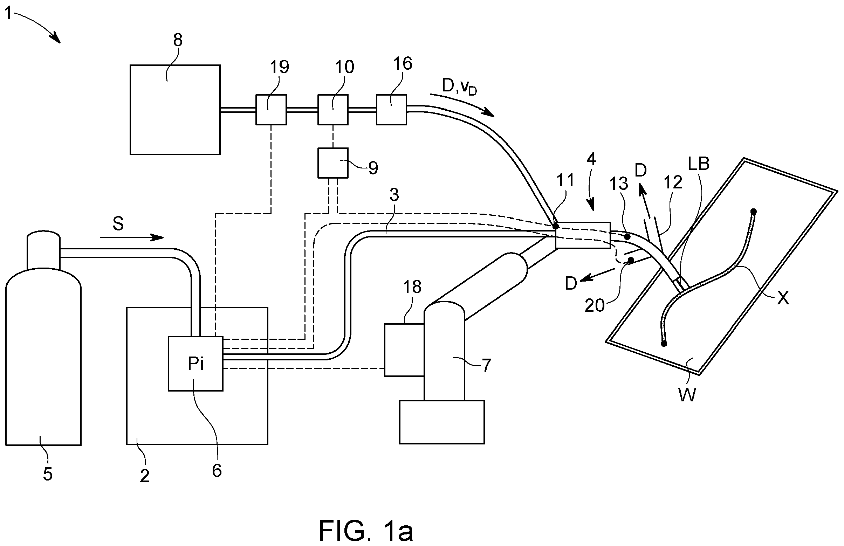

Fig. 1a zeigt ein Blockschaltbild einer Schweißvorrichtung 1 mit einer Vorrichtung zur Kühlung von Komponenten der Schweißvorrichtung 1 mit Hilfe von Druckluft D. Die Schweißvorrichtung 1 beinhaltet eine Schweißstromquelle 2, welche über ein Schlauchpaket 3 mit dem Schweißbrenner 4 verbunden ist. Der Schweißbrenner 4 wird zur Durchführung eines Schweißprozesses PR von Hand oder mit Hilfe eines Schweißroboters 7 oder eines anderen Manipulators entlang einer gewünschten Schweißbahn X auf mindestens einem Werkstück W bewegt. Während des Schweißprozesses PR wird der Schweißbrenner 4 über eine Steuervorrichtung 6 in der Schweißstromquelle 2 mit entsprechenden Schweißparametern Pᵢ, insbesondere mit einem entsprechenden Schweißstrom I versorgt, sodass zwischen der Elektrode des Schweißbrenners 4 und dem Werkstück W ein Lichtbogen LB brennt. Um eine negative Beeinflussung der Schweißnaht durch den Luftsauerstoff zu vermeiden, wird ein Schutzgas S, beispielsweise Argon, von einer Schutzgasvorrichtung 5 über die Schweißstromquelle 2, über das Schlauchpaket 3 und über den Schweißbrenner 4 zur Schweißstelle transportiert. In einer anderen Ausführungsform wäre es auch möglich, die Regelung des Schutzgases S in einer Vorschubeinrichtung für den Schweißdraht anzuordnen, welche von der Schweißstromquelle 2 räumlich getrennt sein kann. Neben Argon als Schutzgas S können beispielsweise auch CO₂, Helium, O₂ und deren Gemische eingesetzt werden. Zur Kühlung der während des Schweißprozesses PR durch den Lichtbogen LB aufgeheizten Komponenten der Schweißvorrichtung 1, insbesondere der Komponenten des Schweißbrenners 4, wird Druckluft D verwendet. Die Druckluft D gelangt von einer Druckluftquelle 8 über ein Druckluftventil 10, beispielsweise einem Magnetventil, zum Schweißbrenner 4. Zu diesem Zweck wird die Druckluft D über entsprechende Leitungen zu einem am Schweißbrenner 4 angeordneten Einlass 11 geleitet. Nach einem Durchströmen des Schweißbrenners 4 über geeignet angeordnete Kühlkanäle gelangt die Druckluft D über geeignet angeordnete Auslässe 12 am Schweißbrenner in die Atmosphäre. Zur Minimierung des Einflusses auf das Schutzgas S wird die Druckluft vorzugsweise radial und/oder axial nach hinten aus dem Schweißbrenner 4 oder dessen Rohrbogen ausgeströmt. Am Auslass 12 kann ein Sensor 20 (beispielsweise ein Feuchtigkeitssensor) zur Messung des Flüssigkeitsanteils der Druckluft D angeordnet und zur Lieferung dieser Information an die Steuervorrichtung 6 der Schweißstromquelle 2 mit dieser verbunden sein. Dadurch kann die Einstellung eines geeigneten Prozessfensters während des Schweißprozesses unterstützt werden. Ein ideales Prozessfenster liegt beispielsweise vor, wenn der am Einlass 11 zugeführte Nassdampf bei der Kühlung des Schweißbrenners 4 und der dabei aufgenommenen Verdampfungsenthalpie vollständig vom Zustand eines Nassdampfes in den Zustand eines Heißdampfes übergeht und keine Flüssigkeiten mehr am Auslass 12 durch den Sensor 20 messbar sind. Im Zuge des Findens eines geeigneten Prozessfensters kann es vorübergehend zu geringem Flüssigkeitsaustritt, in der Regel wenige Tropfen, am Auslass 12 kommen. Dies könnte unter Umständen die Schweißqualität negativ beeinflussen. Für diesen Fall des vorübergehenden Austritts von flüssigen Medien am Auslass 12 während der Suche eines geeigneten Prozessfensters, wäre es möglich, durch Einsatz einer hydrophilen Struktur dies zu unterbinden, da sich überschüssiges flüssiges Medium zumindest temporär in einer derartigen Struktur binden lässt. Die hydrophile Struktur kann beispielsweise als Schwamm, Netz, Gitter, Vlies, Filz, Pulver oder allgemein poröses Medium mit einem vorzugsweise hohen Verhältnis von Oberfläche zu Volumen und einer guten Oberflächenbenetzbarkeit für das jeweilige Fluid ausgeführt sein. Ebenso kann die hydrophile Struktur aus unterschiedlichen Komponenten und Materialen bestehen. Ferner muss das verwendete Material möglichst temperaturstabil und beständig gegen Feuchtigkeitswechsel sein. Vorteilhaft ist eine Anbringung der Struktur zwischen dem Auslass 12 und einer Wärmequelle längs des Kühlpfads. Dies ist in Fig. 1a der Übersichtlichkeit wegen, nicht dargestellt. Nach Erreichen eines stabilen Prozesszustands, wird die hydrophile Struktur beispielsweise wieder durch den Heißdampf getrocknet und das temporär gespeicherte flüssige Medium somit wieder an die Druckluft D abgegeben. Eine Messung des Beladungszustands der hydrophilen Struktur oder eine Aussage über die Sättigung der hydrophilen Struktur mit einer Flüssigkeit, kann über Sensoren gewährleistet werden. Beispielsweise durch eine simple Messung des Durchgangswiderstands, da der Widerstand der in der Regel nichtleitenden hydrophilen Struktur durch eine Oberflächenbenetzung und/oder Wassereinlagerung, je nach Flüssigkeit und Strukturmaterial, beispielsweise abnehmen kann. Dieser Sensor zur Messung des Beladungszustands der hydrophilen Struktur kann mit der Steuervorrichtung 6 der Schweißstromquelle 2 verbunden sein. Die Steuervorrichtung 6 der Schweißstromquelle 2 kennt die Be- und Entladezyklen der hydrophilen Struktur und kann nach einer definierten Anzahl an Be- und Entladezyklen einen Wechsel und eine Erneuerung der hydrophilen Struktur vorschlagen und dem Benutzer über eine Schnittstelle anzeigen. Das System ist so konstruiert, sodass ein einfacher Wechsel der hydrophilen Struktur und/oder des Sensors für den Beladezustand möglich ist. Der Wechsel der hydrophilen Struktur und das gegebenenfalls ummantelnde Gehäuse und/oder des Sensors kann beispielsweise über Schraubverbindungen, Push-In-Verbindungen, Klick-Verbindungen, Klemmverbindungen, Bajonettverbindungen und formschlüssige und/oder kraftschlüssige Verbindungen im Allgemeinen erfolgen. In Ausnahmefällen können auch stoffschlüssige Verbindungen verwendet werden. Ferner ist es auch möglich, dass die hydrophile Struktur und der Sensor für die Messung des Beladungszustandes eine Einheit bilden.

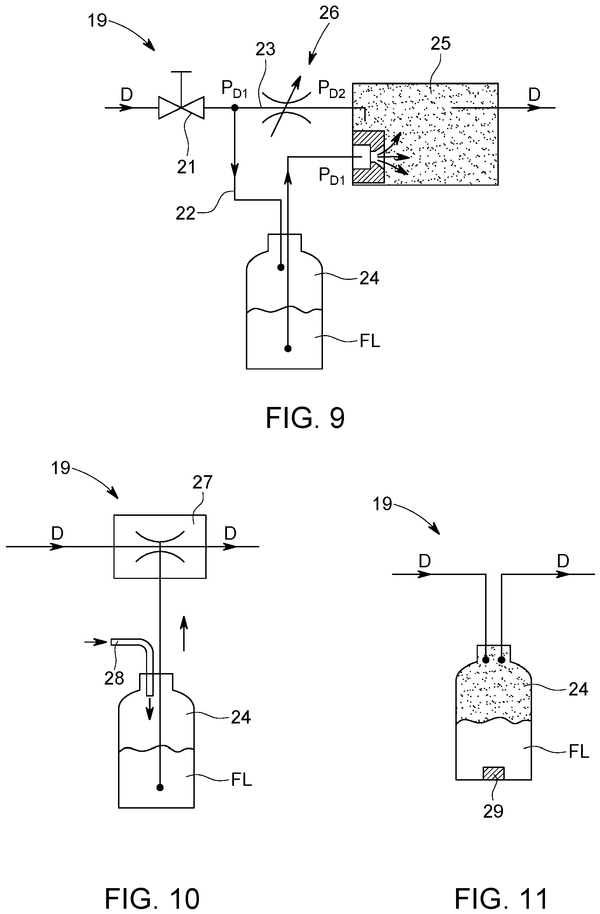

Stromabwärts oder stromaufwärts des Druckluftventils 10 kann eine Drossel 16 angeordnet sein. Die Drossel 16 kann beispielsweise durch ein schlauchförmiges Element gebildet sein, welches den Durchfluss der Druckluft D durch Durchmesser und Länge begrenzt. Die Drossel 16 kann fix eingebaut oder austauschbar sein. Die Drosselcharakteristik der Drossel 16 kann mechanisch determiniert oder variabel ausgeführt werden. Der Wechsel der Drossel 16 kann beispielsweise über Schraubverbindungen, Push-In-Verbindungen, Klick-Verbindungen, Klemmverbindungen, Bajonettverbindungen und formschlüssige und/oder kraftschlüssige Verbindungen im Allgemeinen erfolgen. In Ausnahmefällen können auch stoffschlüssige Verbindungen verwendet werden. Zwischen Druckluftquelle 8 und Drossel 16 kann eine Vorrichtung 19 zur Beimengung einer Flüssigkeit FL zur Druckluft D angeordnet sein. Diese Vorrichtung 19 zur Beimengung einer Flüssigkeit FL zur Druckluft D kann prinzipiell an jeder Stelle des Druckluftstrangs angeordnet werden. Die Vorrichtung 19 ist vorzugsweise mit der Schweißstromquelle 2 verbunden und wird über diese geregelt oder gesteuert. Ausführungsbeispiele der Vorrichtung 19 zur Beimengung einer Flüssigkeit FL zur Druckluft D finden sich in den Figuren 9 bis 11. Ferner ist es für einen Fachmann naheliegend, weitere Komponenten in den für die Kühlung vorgesehenen Druckluftstrang einzubinden. Hierbei können beispielsweise Antriebseinheiten für den Schweißdraht, elektronische Einheiten und Bauteile und weitere temperaturkritische Bauteile im Allgemeinen mit eingebunden werden. Des Weiteren können auch über den für die Kühlung vorgesehenen Druckluftstrang gezielt Wärmesenken auch bei nicht temperaturkritischen Bauteilen, wie beispielsweise Flanschen, Halterungen oder Ähnlichem geschaffen werden, sodass diese Bauteile als Wärmesenke für temperaturkritische Bauteile fungieren können. Dies ist vorteilhaft für die indirekte Kühlung von Bauteilen, welche nicht mit Druckluft durchströmt werden können oder sollen. Des Weiteren können durch die gezielte Schaffung von Wärmesenken Normen und Verordnungen hinsichtlich der Sicherheit für den Benutzer erfüllt werden. Beispielsweise wäre eine derartige Anwendung bei der Kühlung von Griffschalen und/oder berührbaren Oberflächen im Allgemeinen denkbar.

Das Druckluftventil 10 ist mit einer Vorrichtung 9 zur Steuerung oder Regelung der Durchflussmenge der Druckluft D verbunden, welche wiederum mit der Schweißstromquelle 2 und allenfalls der Steuervorrichtung 18 des Schweißroboters 7 verbunden ist (strichlierte Verbindungen). Dadurch ist eine erfindungsgemäße Steuerung oder Regelung der Durchflussmenge der Druckluft D in Abhängigkeit von Schweißparametern Pᵢ möglich. Durch diese Steuerung oder Regelung kann die Kühlung der Komponenten der Schweißvorrichtung 1 optimal eingestellt und der allfällige Einfluss auf das Schutzgas S während des Schweißprozesses PR minimiert werden. Somit resultiert auch bei Verwendung von Druckluft D eine optimale Kühlung der Schweißvorrichtung 1 ohne dass die Nachteile einer Flüssigkeitskühlung, insbesondere die höheren Investitionskosten und Wartungskosten und die Möglichkeit von Leckagen, auftreten. Die Kosten für die Druckluftkühlung können relativ gering gehalten werden.

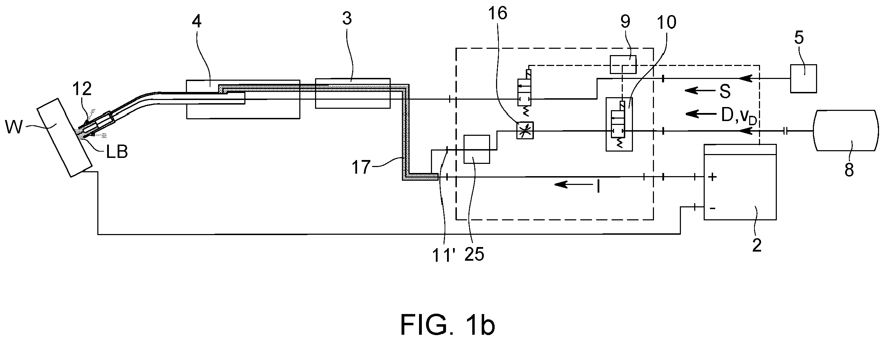

Fig. 1b bis 1d zeigt Blockschaltbilder verschiedener Varianten von Schweißvorrichtungen 1 mit Vorrichtungen zur Kühlung von Komponenten der Schweißvorrichtung 1 mit Hilfe von Druckluft D gegenüber Figur 1a.

Bei der Variante gemäß Fig. 1b gelangt die Druckluft D von der Druckluftquelle 8 über ein Druckluftventil 10, hier ein Magnetventil, einer Drossel 16 und ferner über einen Zerstäuber 25, bei welchem der Druckluft D eine Flüssigkeit FL beigemengt wird, zu einem Drucklufteinlass 11' am Schweißstromquellen 2 seitigen Ende des Schlauchpakets 3, wodurch auch das Stromkabel 17 zur Führung des Schweißstroms I mit der Druckluft D gekühlt werden kann. Zu diesem Zweck wird die Druckluft D über einen entsprechenden Kanal um das Stromkabel 17 im Schlauchpaket 3 zum Schweißbrenner 4 geführt. Nach Kühlung der entsprechenden Komponenten im Schweißbrenner 4 wird die Druckluft D über geeignet angeordnete Auslässe 12 aus dem Schweißbrenner 4 abgeführt. In Fig. 1b erfolgt über das durch ein Magnetventil gebildete Druckluftventil 10 eine Steuerung der Durchflussmenge der Druckluft D.

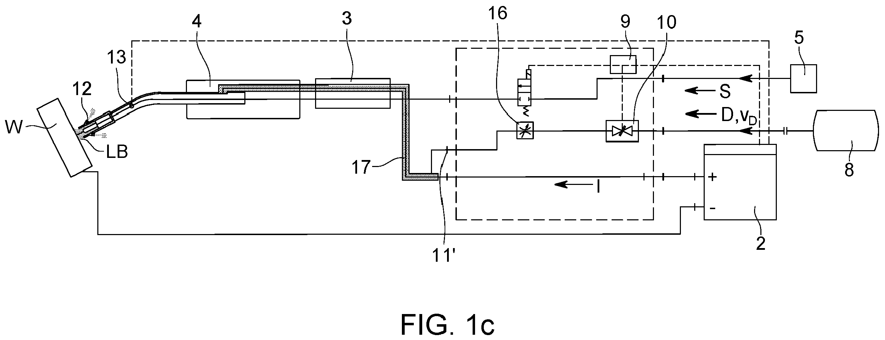

Bei der Variante gemäß Fig. 1c ist das Druckluftventil 10 durch ein Gasregelventil gebildet und im Schweißbrenner 4 ein Temperatursensor 13 angeordnet, sodass eine Regelung der Durchflussmenge der Druckluft D in Abhängigkeit der durch den Temperatursensor 13 gemessenen Temperatur im Schweißbrenner 4 stattfinden kann.

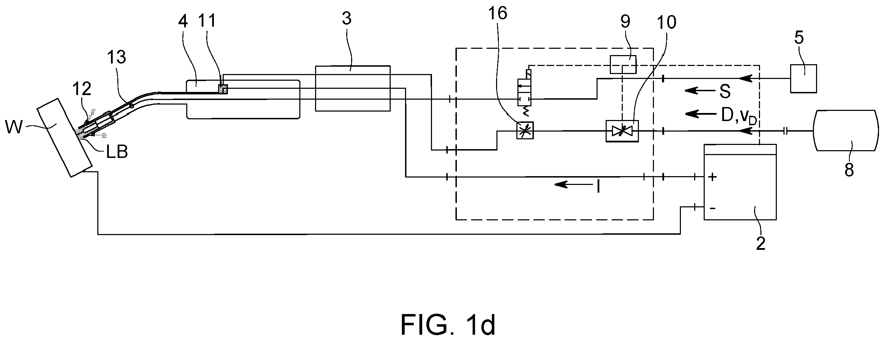

Die Ausführungsvariante gemäß Fig. 1d zeigt eine Kühlung mittels Druckluft D, wobei die Druckluft über einen Einlass 11 dem Schweißbrenner 4 zugeführt wird. Auch hier ist das Druckluftventil 10 durch ein Gasregelventil gebildet, welches mit einem im Schweißbrenner 4 angeordneten Temperatursensor 13 verbunden ist. Somit erfolgt eine Regelung der Durchflussmenge der Druckluft D in Abhängigkeit der gemessenen Temperatur im Schweißbrenner 4.

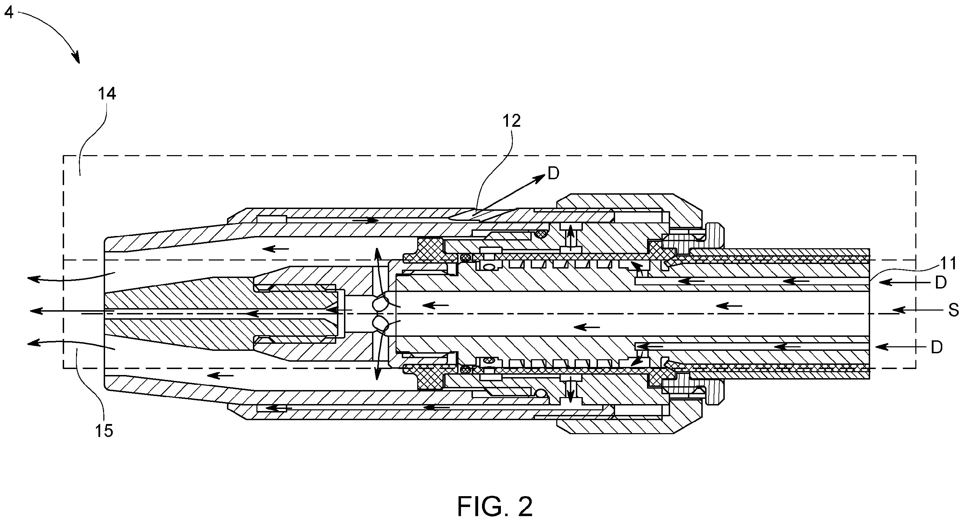

Fig. 2 zeigt ein schematisches Schnittbild durch die Lichtbogengruppe (Kontaktrohr, Düsenstock, Düsenstockaufnahme, Isolatoren, Gasdüsenaufnahme, Gasdüse, Kühlmantelrohr, ...) eines Druckluft-gekühlten Schweißbrenners 4. Die Druckluft D wird über einen Einlass 11 in den Schweißbrenner 4 eingeströmt und gelangt über entsprechende Kanäle im Kontaktrohrstrang 15 und im Gasdüsenstrang 14 zu axial nach hinten orientierte Auslässe 12 in die Atmosphäre. Das Schutzgas S wird über einen zentralen Kanal im Kontaktrohrstrang 15, in welchem auch der abschmelzbare Schweißdraht verläuft, eingeleitet und über den Gasdüsenstrang 14 zur Schweißstelle geführt.

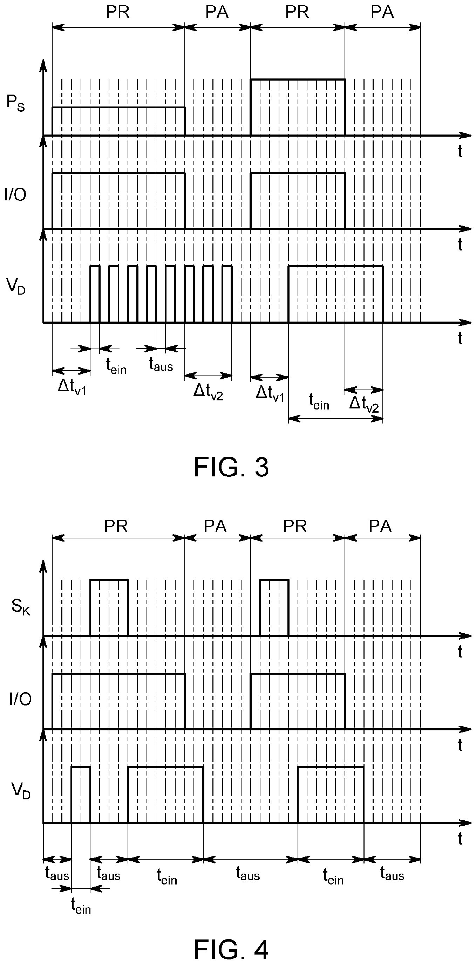

Fig. 3 zeigt ein Ausführungsbeispiel der Regelung der Druckluft zur Kühlung von Komponenten einer Schweißvorrichtung in Abhängigkeit der Schweißleistung Pₛ. Im obersten Diagramm ist die durchschnittliche Schweißleistung Pₛ in Abhängigkeit der Zeit t dargestellt. Im zweiten Zeitdiagramm ist die Aktivierung I/O der Schweißstromquelle 2 in Abhängigkeit der Zeit t dargestellt. Zwischen den Schweißprozessen PR finden Schweißpausen PA statt. Im dritten Diagramm ist die Aktivierung der Druckluft D bzw. die Aktivierung eines Druckluftventils 10 in Abhängigkeit der Zeit t dargestellt. Die Durchflussmenge V_{D} der Druckluft D wird in zeitlicher Abhängigkeit zum Schweißprozess PR geregelt, indem mit einer vorgegebenen Zeitverzögerung Δt_{V1} zeitverzögert nach Beginn des Schweißprozesses PR die Druckluft D zugeschaltet und mit einer vorgegebenen Zeitverzögerung Δt_{V2} zeitverzögert nach Ende des Schweißprozesses PR wieder abgeschaltet wird. Beim ersten Schweißprozess PR mit geringerer Schweißleistung P_{S} findet eine mehrfache Aktivierung und Deaktivierung des Druckluftventils 10 statt. Beispielhaft ist in Fig. 3 die Öffnungsdauer tₑᵢₙ des aktivierten Druckluftventils 10 und die Schließdauer tₐᵤₛ des deaktivierten Druckluftventils 10 eingezeichnet. Beim zweiten Schweißprozess PR mit höherer durchschnittlicher Schweißleistung P_{S} bleibt das Druckluftventil 10 dauerhaft geöffnet, wodurch die Durchflussmenge V_{D} der Druckluft D für größere Kühlung erhöht wird. Wenn die vorgegebenen Zeitverzögerungen Δt_{V1} und Δt_{V2} entsprechend groß in Bezug auf die Dauer des jeweiligen Schweißprozesses PR gewählt wird, kann erreicht werden, dass die Kühlung maßgeblich oder sogar ausschließlich während der Schweißpausen PA stattfindet. Dadurch kann der Einfluss der Druckluft D auf die Strömung des Schutzgases S und folglich auf die Qualität der Schweißnaht, während des Schweißprozesses PR, minimiert werden.

Fig. 4 zeigt ein Ausführungsbeispiel der Regelung der Druckluft D zur Kühlung von Komponenten einer Schweißvorrichtung 1 in Abhängigkeit eines die Position und Geometrie eines zu schweißenden Werkstücks W entlang einer Schweißbahn X repräsentierenden Schweißparameters S_{K}. Das oberste Diagramm zeigt einen Parameter S_{K}, der kritische Bereiche in Bezug auf das Schutzgas S während der Schweißprozesse PR charakterisiert. Die Kühlung mittels Druckluft D wird nun so gesteuert oder geregelt, dass nur außerhalb dieser kritischen Bereiche während der der Parameter S_{K} eingeschaltet ist, die Druckluft D aktiviert wird.

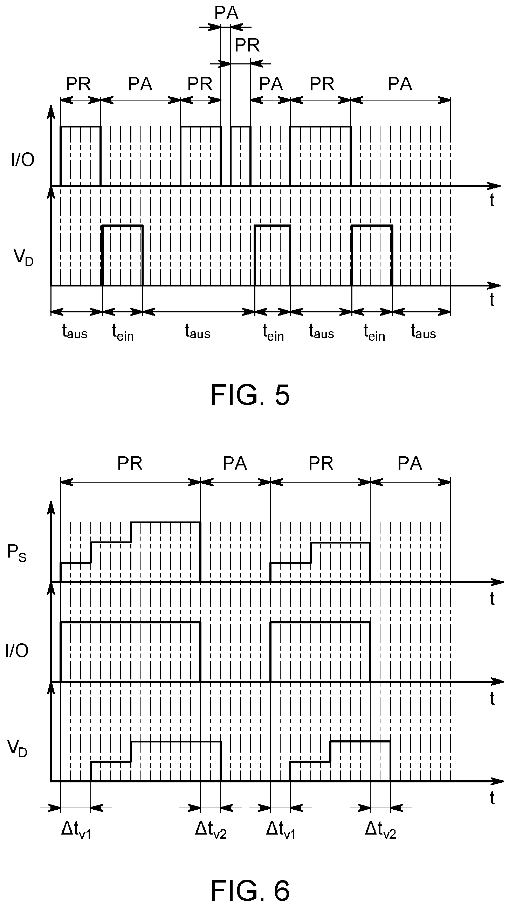

Fig. 5 zeigt ein Ausführungsbeispiel der Regelung der Druckluft D zur Kühlung von Komponenten einer Schweißvorrichtung 1 in Abhängigkeit des Schweißprozesses PR. Bei diesem Beispiel wird die Druckluft D nur während Schweißpausen PA zwischen den Schweißprozessen PR aktiviert bzw. das Druckluftventil 10 eingeschaltet. Die Öffnungszeiten tₑᵢₙ des Druckluftventils 10 liegen daher ausschließlich in den Schweißpausen PA. Dadurch kann die Beeinflussung des Schutzgases S durch die Druckluft D minimiert bzw. ausgeschaltet werden. Diese Variante ist besonders bei relativ kurzen Schweißprozessen PR und dazwischen auftretenden Schweißpausen PA vorteilhaft.

Fig. 6 zeigt ein Ausführungsbeispiel der Regelung der Druckluft D zur Kühlung von Komponenten einer Schweißvorrichtung 1 in Abhängigkeit der Schweißleistung P_{S}. Hier wird die Durchflussmenge V_{D} der Druckluft D in Abhängigkeit der durchschnittlichen Schweißleistung P_{S} geregelt, also bei höherer Schweißleistung P_{S} mehr Druckluftvolumen zur Kühlung verwendet. Zusätzlich wird wie beim Ausführungsbeispiel gemäß Fig. 1 die Druckluft D mit einer vorgegebenen Zeitverzögerung Δt_{V1} zeitverzögert nach Beginn des Schweißprozesses PR zugeschaltet und mit einer vorgegebenen Zeitverzögerung Δt_{V2} zeitverzögert nach Ende des Schweißprozesses PR wieder abgeschaltet.

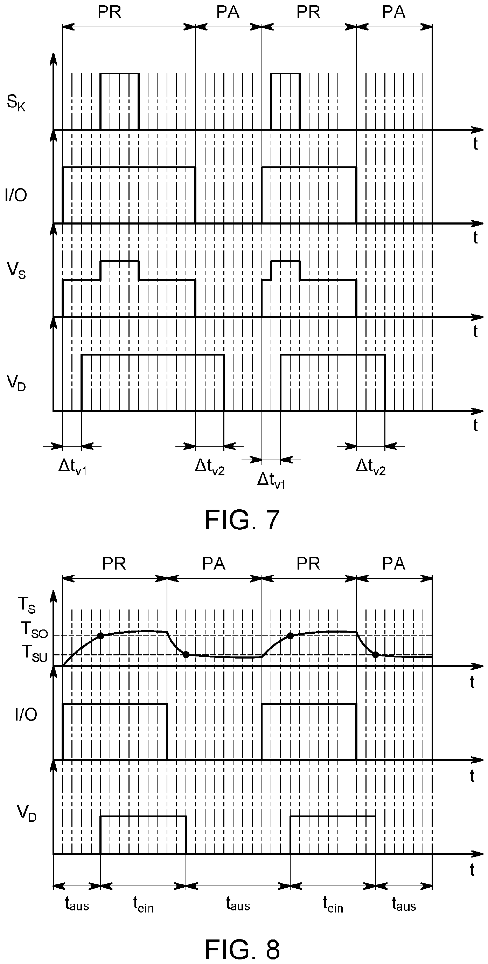

Fig. 7 zeigt ein Ausführungsbeispiel der Regelung der Druckluft D zur Kühlung von Komponenten einer Schweißvorrichtung 1 in Abhängigkeit kritischer Bereiche des Schweißprozesses unter gleichzeitiger Regelung der Schutzgasmenge V_{S}. In diesem Fall wird die Durchflussmenge V_{S} des Schutzgases S zu Zeiten während der Schweißprozesse PR, wo kritische Bereiche in Bezug auf das Schutzgas S geschweißt werden (diese kritischen Bereiche werden durch den Parameter S_{K} charakterisiert) gegenüber der sonstigen Durchflussmenge V_{S} erhöht. Dadurch kann der Einfluss der Druckluft D auf das Schutzgas S minimiert werden. Auch bei diesem Ausführungsbeispiel wird die Druckluft D mit einer vorgegebenen Zeitverzögerung Δt_{V1} zeitverzögert nach Beginn des Schweißprozesses PR zugeschaltet und mit einer vorgegebenen Zeitverzögerung Δt_{V2} zeitverzögert nach Ende des Schweißprozesses PR wieder abgeschaltet.

Schließlich zeigt Fig. 8 ein weiteres Ausführungsbeispiel der Regelung der Druckluft D zur Kühlung von Komponenten einer Schweißvorrichtung 1 in Abhängigkeit der Temperatur Tₛ im Schweißbrenner 4. Im obersten Diagramm ist der zeitliche Verlauf der mit Hilfe zumindest eines geeigneten Temperatursensors 13 gemessenen Temperatur Tₛ im Schweißbrenner 4 bzw. an kritischen Punkten im Schweißbrenner 4 dargestellt. Während der Schweißprozesse PR steigt die Temperatur Tₛ beispielsweise exponentiell an und fällt während der Schweißpausen wieder beispielsweise exponentiell ab. Bei Überschreitung einer voreingestellten oberen Temperaturschwelle T_{So} für die Temperatur T_{S} wird die Kühlung mit Hilfe der Druckluft aktiviert bzw. das Druckluftventil 10 geöffnet und nach Unterschreitung einer voreingestellten unteren Temperaturschwelle T_{Su} für die Temperatur T_{S} wieder geschlossen. Die Öffnungsdauer tₑᵢₙ des Druckluftventils hängt also von der Temperatur T_{S} im Schweißbrenner 4 ab.

In Fig. 9 ist eine mögliche Ausführungsform einer Vorrichtung 19 zur Beimengung einer Flüssigkeit FL zur Druckluft D dargestellt. Hierbei funktioniert die Beimengung der Flüssigkeit FL über eine sogenannte Drucklösung. Nach einem Ventil 21 teilt sich die Druckluft D mit einem Druck p_{D1} in zwei Druckluftzweige 22, 23 auf. Der erste Druckluftzweig 22 läuft über einen Flüssigkeitsbehälter 24 mit der beizumengenden Flüssigkeit FL, wodurch die Flüssigkeit FL von der Druckluft D aufgenommen wird. Hierbei reduziert sich der Druck p_{D1} nur minimal. Anschließend führt der erste Druckluftzweig 22 in einen Zerstäuber 25 und wird in diesem entspannt. Der zweite Druckluftzweig 23 läuft über eine Drossel 26, wodurch sich der Druck p_{D1} zu einem Druck p_{D2} reduziert. Anschließend läuft der zweite Druckluftzweig 23 ebenfalls in den Zerstäuber 25. Aus dem Zerstäuber 25 wird dann die mit der Flüssigkeit FL angereicherte Druckluft D zur weiteren Verwendung weitergeführt. In den meisten Fällen kann die zum Einsatz kommende Flüssigkeit FL mittels relativ kleinen Flüssigkeitsbehältern 24, Tanks oder ähnlichen Flüssigkeitsspeichern zur Verfügung gestellt werden und gegebenenfalls in der Vorrichtung 19 zur Beimengung der Flüssigkeit FL zur Druckluft D fix integriert werden. Die Flüssigkeitsbehälter 24 können beheizt sein, um beispielsweise die Temperatur zumindest über dem Gefrierpunkt, beispielsweise über 6°C zu halten. Des Weiteren können derartige Flüssigkeitsbehälter 24 eine Flüssigkeitsstandanzeige aufweisen und den Füllstand an die Schweißstromquelle 2 oder die Steuervorrichtung 6 der Schweißstromquelle 2 übertragen. Im Falle einer Unterschreitung des Füllstands der Flüssigkeit FL könnte ein Warnsignal an der Schweißstromquelle 2 oder an den Benutzer ausgegeben werden. Zusätzlich könnte bei einer zu niedrigen Temperatur oder einer zu hohen Temperatur der Flüssigkeit FL, bei definierten Grenzwerten, ebenso eine Warnung oder ein Hinweis an der Schweißstromquelle 2 oder den Benutzer ausgegeben werden. Der Flüssigkeitsbehälter 24 kann derart ausgeführt sein, dass er während des Betriebs nachgefüllt und/oder durch einen einfachen Mechanismus gewechselt werden kann. Der Wechsel des Flüssigkeitsbehälters 24 kann beispielsweise über Schraubverbindungen, Push-In-Verbindungen, Klick-Verbindungen, Klemmverbindungen, Bajonettverbindungen und formschlüssige und/oder kraftschlüssige Verbindungen im Allgemeinen erfolgen. In Ausnahmefällen können auch stoffschlüssige Verbindungen verwendet werden.

In Fig. 10 ist eine weitere mögliche Ausführungsform einer Vorrichtung 19 zur Beimengung einer Flüssigkeit FL zur Druckluft D dargestellt. Hierbei funktioniert die Beimengung der Flüssigkeit FL über eine sogenannte Sauglösung. Hierbei nimmt die Druckluft D die Flüssigkeit FL aus dem Flüssigkeitsbehälter 24 über eine Venturi-Düse 27 auf. Im Flüssigkeitsbehälter 24 befindet sich eine Entlüftungsöffnung 28.

In Fig. 11 ist eine dritte mögliche Ausführungsform einer Vorrichtung 19 zur Beimengung einer Flüssigkeit FL zur Druckluft D dargestellt. Hierbei funktioniert die Beimengung der Flüssigkeit FL über einen im Flüssigkeitsbehälter 24 angeordneten Piezozerstäuber 29.

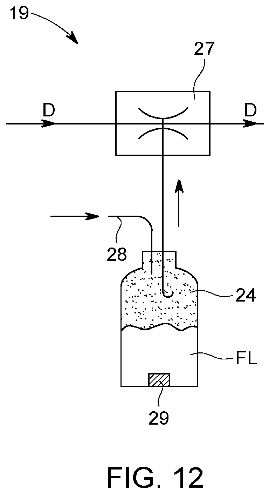

In Fig. 12 ist eine vierte mögliche Ausführungsform einer Vorrichtung 19 zur Beimengung einer Flüssigkeit FL zur Druckluft D dargestellt. Hierbei funktioniert die Beimengung der Flüssigkeit FL über einen im Flüssigkeitsbehälter 24 angeordneten Piezozerstäuber 29 in Kombination mit einer Venturi-Düse 27. Im Flüssigkeitsbehälter 24 befindet sich eine Entlüftungsöffnung 28.

Abgesehen von den dargestellten Ausführungsbeispielen existieren noch unzählige weitere Möglichkeiten und Kombinationen einer Steuerung oder Regelung der gegebenenfalls mit einer Flüssigkeit FL versetzten Druckluft D zur Kühlung der Komponenten der Schweißvorrichtung 1.

## Patentansprüche

1. Verfahren zur Kühlung von Komponenten einer aus einer Schweißstromquelle (2) und einem über ein Schlauchpaket (3) mit der Schweißstromquelle (2) verbundenen Schweißbrenner (4) bestehenden Schweißvorrichtung (1) mit einer Vorrichtung (5) zur Bereitstellung eines Schutzgases (S), wobei Druckluft (D) zu den zu kühlenden Komponenten der Schweißvorrichtung (1) geführt wird, **dadurch gekennzeichnet, dass** die Durchflussmenge (V_{D}) der Druckluft (D) zur Kühlung der Komponenten der Schweißvorrichtung (1) in Abhängigkeit von Schweißparametern (Pᵢ) gesteuert oder geregelt wird.

2. Verfahren nach Anspruch 1, **dadurch gekennzeichnet, dass** die Durchflussmenge (V_{D}) der Druckluft (D) in Abhängigkeit der durchschnittlichen Schweißleistung (P_{S}) gesteuert oder geregelt wird.

3. Verfahren nach Anspruch 1 oder 2, **dadurch gekennzeichnet, dass** die Durchflussmenge (V_{D}) der Druckluft (D) in zeitlicher Abhängigkeit zum Schweißprozess geregelt wird, insbesondere mit einer vorgegebenen Zeitverzögerung (Δt_{V1}) zeitverzögert nach Beginn des Schweißprozesses zugeschaltet und mit einer vorgegebenen Zeitverzögerung (Δt_{V2}) zeitverzögert nach Ende des Schweißprozesses abgeschaltet wird.

4. Verfahren nach Anspruch 3, **dadurch gekennzeichnet, dass** im Falle mehrerer durch Schweißpausen (PA) unterbrochener Schweißprozesse (PR) die Durchflussmenge (V_{D}) der Druckluft (D) derart geregelt wird, dass die Druckluft (D) während der Schweißpausen (PA), vorzugsweise ausschließlich während der Schweißpausen (PA), zugeschaltet wird.

5. Verfahren nach einem der Ansprüche 1 bis 4, **dadurch gekennzeichnet, dass** die Durchflussmenge (V_{D}) der Druckluft (D) in Abhängigkeit eines die Position und Geometrie eines zu schweißenden Werkstücks (W) entlang einer Schweißbahn (X) repräsentierenden Schweißparameters (Pᵢ) gesteuert oder geregelt wird.

6. Verfahren nach einem der Ansprüche 1 bis 5, **dadurch gekennzeichnet, dass** die Durchflussmenge (V_{D}) der Druckluft (D) in Abhängigkeit zumindest einer im Schweißbrenner (4) gemessenen Temperatur (T_{S}) gesteuert oder geregelt wird.

7. Verfahren nach einem der Ansprüche 1 bis 6, **dadurch gekennzeichnet, dass** die Durchflussmenge (V_{S}) an Schutzgas (S) in Abhängigkeit der Durchflussmenge (V_{D}) der Druckluft (D) gesteuert oder geregelt wird.

8. Verfahren nach einem der Ansprüche 1 bis 7, **dadurch gekennzeichnet, dass** der Druckluft (D) eine Flüssigkeit (FL) beigemengt wird.

9. Vorrichtung zur Kühlung von Komponenten einer aus einer Schweißstromquelle (2) und einem über ein Schlauchpaket (3) mit der Schweißstromquelle (2) verbundenen Schweißbrenner (4) bestehenden Schweißvorrichtung (1) mit einer Vorrichtung (5) zur Bereitstellung eines Schutzgases (S), mit einer Druckluftquelle (8) zur Bereitstellung von Druckluft (D) zur Kühlung der zu kühlenden Komponenten der Schweißvorrichtung (1), **dadurch gekennzeichnet, dass** eine Vorrichtung (9) zur Steuerung oder Regelung der Durchflussmenge (V_{D}) der Druckluft (D) zur Kühlung der Komponenten der Schweißvorrichtung (1) in Abhängigkeit von Schweißparametern (Pᵢ) vorgesehen ist.

10. Kühlvorrichtung nach Anspruch 9, **dadurch gekennzeichnet, dass** die Vorrichtung (9) zur Steuerung oder Regelung der Durchflussmenge (V_{D}) der Druckluft (D) mit einem Druckluftventil (10), insbesondere einem Magnetventil, verbunden ist.

11. Kühlvorrichtung nach Anspruch 9 oder 10, **dadurch gekennzeichnet, dass** die Vorrichtung (9) zur Steuerung oder Regelung der Durchflussmenge (V_{D}) der Druckluft (D) mit einer Steuervorrichtung (6) der Schweißstromquelle (2) verbunden ist.

12. Kühlvorrichtung nach einem der Ansprüche 9 bis 11, **dadurch gekennzeichnet, dass** die Vorrichtung (9) zur Steuerung oder Regelung der Durchflussmenge (V_{D}) der Druckluft (D) mit einer Steuervorrichtung (18) eines Schweißroboters (7) verbunden ist.

13. Kühlvorrichtung nach einem der Ansprüche 9 bis 12, **dadurch gekennzeichnet, dass** Vorrichtung (9) zur Steuerung oder Regelung der Durchflussmenge (V_{D}) der Druckluft (D) mit zumindest einem Temperatursensor (13), vorzugsweise einem im Schweißbrenner (4) angeordneten Temperatursensor (13), verbunden ist.

14. Kühlvorrichtung nach einem der Ansprüche 9 bis 13, **dadurch gekennzeichnet, dass** am Schweißbrenner (4) zumindest ein Einlass (11) für die Druckluft (D) und bzw. oder am Schlauchpaket (3) zumindest ein Einlass (11') für die Druckluft (D) und am Schweißbrenner (4) zumindest ein Auslass (12), vorzugsweise mehrere radial nach außen und bzw. oder schräg nach hinten und bzw. oder axial nach hinten orientierte Auslässe (12), für die Druckluft (D) angeordnet sind.

15. Kühlvorrichtung nach einem der Ansprüche 9 bis 14, **dadurch gekennzeichnet, dass** eine Vorrichtung (19) zur Beimengung von Flüssigkeit (FL) zur Druckluft (D) vorgesehen ist.
